# EUROPEAN PATENT APPLICATION

(11) **EP 4 524 363 A1**
(43) Date of publication of application: **19.03.2025**
(21) Application number: 24199967.1
(22) Date of filing: 12.09.2024
(51) Int. Cl.: E21B 47/00

(54) **MACHINE LEARNING AND PHYSICS FUSION MODELING ON RUN DURATION**

(30) Priority: 14.09.2023 US 202318467051
(71) Applicant: Services Pétroliers Schlumberger, 75007 Paris (FR); Schlumberger Technology B.V., 2514 JG The Hague (NL)
(72) Inventor: LI, Wei, Beijing 100084 (CN); LI, Wenrui, Beijing 100084 (CN); ZHANG, Yang, Beijing 100084 (CN); MENG, Lihui, Beijing 100084 (CN); XI, Pan, Beijing 100084 (CN); XU, Da Wei, Beijing 100084 (CN); GEMMELL, Daniel, 50250 Kuala Lumpur (MY)
(74) Representative: Schlumberger Intellectual Property Department

(57) **Abstract**

Embodiments presented provide for modeling of wireline runs for hydrocarbon recovery operations. In embodiments, a run duration of wireline activities is split into a winch duration and a pass duration, wherein the pass duration is calculated using a machine learning model.

## Description

(Reserved)

### FIELD OF THE DISCLOSURE

Aspects of the disclosure relate to field operations for hydrocarbon recovery. More specifically, aspects of the disclosure relate to optimizing field hydrocarbon operations by using machine learning to optimize aspects of the field operations based upon past events and data.

### BACKGROUND

Recovery operations for downhole hydrocarbon deposits have been accomplished for over 100 years. To this end, recovery operations have developed technologies during this time span to enhance field personnel operations.

The tools used by personnel for hydrocarbon recovery have become much more efficient and accurate. Over the years, a more intensive effort has been undertaken in that efficiency has taken a very prominent role in such recoveries. Often, oil field service corporations are limited in the amount of profit they can make on any particular project. Profits are maximized if the project can be completed quickly, efficiently, and safely. These three factors make potential project planning difficult for even the most seasoned of operators.

Efficiency often relates to using the correct equipment at the correct time. Years of knowledge are necessary in order to make an operation efficient. Field personnel charged with these responsibilities are often highly experienced individuals, making them good candidates for such planning activities. Unfortunately, such highly experienced individuals are not easily found and can increase the costs associated with field operations. As deposits of hydrocarbons that may be harvested continue to get smaller around the globe, and the need for hydrocarbons increases, an ever-increasing number of projects are needed.

There is a need to provide an apparatus and methods that are easier to operate than conventional apparatus and methods for planning hydrocarbon recovery operations.

There is a further need to provide apparatus and methods that do not have the drawbacks discussed above, namely the use of expensive field personnel.

There is a still further need to reduce economic costs associated with operations and apparatus described above with conventional tools.

There is a still further need to be able to use previous project data to be able to create work plans for field activities.

There is also a need to be able to continually update designs to the most efficient levels possible in a quick and efficient manner.

### SUMMARY

So that the manner in which the above recited features of the present disclosure can be understood in detail, a more particular description of the disclosure, briefly summarized below, may be had by reference to embodiments, some of which are illustrated in the drawings. It is to be noted that the drawings illustrate only typical embodiments of this disclosure and are therefore not to be considered limiting of its scope, for the disclosure may admit to other equally effective embodiments without specific recitation. Accordingly, the following summary provides just a few aspects of the description and should not be used to limit the described embodiments to a single concept.

In one non-limiting embodiment, a method for modeling a run duration is disclosed. The method may comprise gathering data related to a wellbore. The method may further comprise gathering data related to a wellbore conveyance. The method may further comprise separating the run duration into a winch duration time and a logging duration time, wherein the winch duration time is calculated according to an algorithm. The method may further comprise feeding the data related to the wellbore and wireline tools, to be used for scanning a section of the wellbore, into a model. The method may further comprise calculating the logging duration time according to the model. The method may further comprise calculating the run duration time of the wireline activity based upon the winch duration time and the logging duration time.

In another example embodiment, an article of manufacture that is configured to store instructions readable by a computer, the instructions including a method for estimating a run duration time of a wireline activity, comprising gathering data related to a wellbore. The method contained on the article of manufacture may also comprise gathering data related to a wellbore conveyance. The method contained on the article of manufacture may also comprise separating the run duration into a winch duration time and a logging duration time, wherein the winch duration time is calculated according to an algorithm. The method contained on the article of manufacture may also comprise feeding the data related to the wellbore and wireline tools, to be used for scanning a section of the wellbore, into a model. The method contained on the article of manufacture may also comprise calculating the logging duration time according to the model. The method contained on the article of manufacture may also comprise calculating the run duration time of the wireline activity based upon the winch duration time and the logging duration time.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the drawings. It is to be noted, however, that the appended drawings illustrate only typical embodiments of this disclosure and are therefore not be considered limiting of its scope, for the disclosure may admit to other equally effective embodiments.
FIG. 1 is an illustration of calculating winch time for a wireline operation in one example embodiment of the disclosure.
FIG. 2 is an illustration for calculating pass time for a wireline operation on one example embodiment of the disclosure.
FIG. 3 is a sample computer arrangement for performing the calculations in one example embodiment of the disclosure.
FIG. 4 is a sample wireline operation being performed by operators from a surface environment.
FIG. 5 is an example method for a machine learning modeling of run durations for a wireline operation in one example embodiment of the disclosure.

To facilitate understanding, identical reference numerals have been used, where possible, to designate identical elements that are common to the figures ("FIGS"). It is contemplated that elements disclosed in one embodiment may be beneficially utilized on other embodiments without specific recitation.

### DETAILED DESCRIPTION

In the following, reference is made to embodiments of the disclosure. It should be understood; however, that the disclosure is not limited to specific described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments, and advantages are merely illustrative and are not considered elements or limitations of the claims except where explicitly recited in a claim. Likewise, reference to "the disclosure" shall not be construed as a generalization of inventive subject matter disclosed herein and should not be considered to be an element or limitation of the claims except where explicitly recited in a claim.

Although the terms first, second, third, etc., may be used herein to describe various elements, components, regions, layers and/or sections, these elements, components, regions, layers and/or sections should not be limited by these terms. These terms may be only used to distinguish one element, components, region, layer or section from another region, layer or section. Terms such as "first", "second" and other numerical terms, when used herein, do not imply a sequence or order unless clearly indicated by the context. Thus, a first element, component, region, layer or section discussed herein could be termed a second element, component, region, layer or section without departing from the teachings of the example embodiments.

When an element or layer is referred to as being "on," "engaged to," "connected to," or "coupled to" another element or layer, it may be directly on, engaged, connected, coupled to the other element or layer, or interleaving elements or layers may be present. In contrast, when an element is referred to as being "directly on," "directly engaged to," "directly connected to," or "directly coupled to" another element or layer, there may be no interleaving elements or layers present. Other words used to describe the relationship between elements should be interpreted in a like fashion. As used herein, the term "and/or" includes any and all combinations of one or more of the associated listed terms.

Some embodiments will now be described with reference to the figures. Like elements in the various figures will be referenced with like numbers for consistency. In the following description, numerous details are set forth to provide an understanding of various embodiments and/or features. It will be understood, however, by those skilled in the art, that some embodiments may be practiced without many of these details, and that numerous variations or modifications from the described embodiments are possible. As used herein, the terms "above" and "below", "up" and "down", "upper" and "lower", "upwardly" and "downwardly", and other like terms indicating relative positions above or below a given point are used in this description to more clearly describe certain embodiments.

Operations in hydrocarbon recovery operations have varied tasks that may be specific to each wellbore and combine these operations into a composite total plan for activities to accomplish wellbore objectives. For wireline operations, the amount of time spent in performing activities can be split into a winch duration and a pass duration. The amount of time that is used winching the overall wireline apparatus for measurement may be separated from the pass time. The pass time is defined as the time in which measurements are taken or recorded by the wireline apparatus. As the pass time can be dependent upon the speed and accuracy required of the wireline tools, splitting the total amount of time for operations into two specific values accurately details the anticipated actions.

First, an example embodiment of a wireline operation is illustrated to familiarize the reader with typical operations. After this wireline operation explanation, a method for machine learning to perform a modeling of run durations is described.

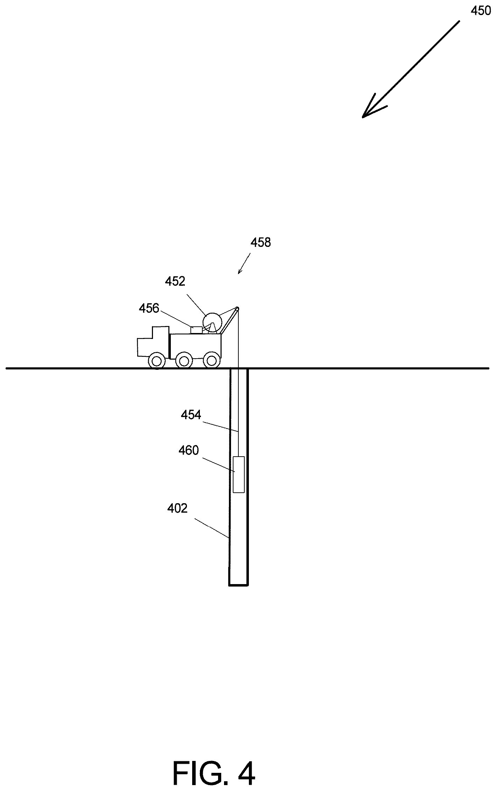

Referring to FIG. 4, wireline operations are performed after the creation of the wellbore **402.** Wireline operations may be accomplished to obtain subsurface petrophysical and geophysical data related to the geological stratum encountered by the wellbore. In these operations, a wireline truck **450** is provided. The wireline truck **450** is provided with a spool **452** that houses a cable **454.** The cable **454** may be a single strand or multiple strand cable unit. The cable **454** is configured to allow sensors and equipment to be lowered into the wellbore such that the sensors and equipment may conduct required surveys. The lowering action may be accomplished by a motor **456** that is connected to the spool **452.** Within the wireline truck **450,** an operator may activate and deactivate the motor **456** and control associated gearing to allow the spool **452** to unwind the cable at a desired rate. Sensors **458** may be provided to ascertain the amount of cable that has been unspooled to allow the operator to identify the location of equipment suspended by the cable.

Equipment supported by the cable can be a single instrument package or multiple instrument packages. In the case of multiple instrument packages, such instrument packages may be modular, such that different types of packages may be added together according to the needs of the operator. Different types of packages may include, but not be limited to:
- Packer systems
- Pressure meter testing systems
- Nuclear measurement systems
- Optical spectrometry systems
- Pressure monitoring systems
- Resistivity calculation systems
- Sonic and ultrasonic tool systems
- Borehole seismic tool systems
- Nuclear magnetic resonance tool systems
- Pressure control systems
- Tractor and motion enhancement systems
- Power Generation systems
- Telemetry and Data recordation systems
- Computing systems

Generally, the different modular systems described above may be added together, as needed, to form a logging tool **460** which may be known as a sonde. The logging tool **460** is lowered into the wellbore to a desired point in the geological stratum and the appropriate system is actuated. The wireline operator may take sensor readings at one point or may take multiple readings while changing the elevation of the logging tool **460.** The resulting string of measurements may be called a "log". Wireline operations may also be used in remediation of a wellbore in order to increase production of hydrocarbons. Such operations, known as remediation or "workovers" may include augmenting existing wellbore parameters.

In the instance of non-vertical wells, wireline operations may be augmented through the use of tractors that allow for the tools to reach more horizontally positions portions of a wellbore. Such horizontal portions of a wellbore may be found, for example, in wells involving fracking operations where a "pay zone" is deposited horizontally parallel to the ground surface. To reach the near horizontal positions of such a wellbore, a tractor that grips the sides of the wellbore may be used to convey instrument packages to the desired position in the wellbore.

In the following description, information is provided related to measurements obtained during wireline operations generally performed, as described above. As will be understood, various changes and alterations may be accomplished during the attainment of the desired measurements and as such, methods described should not be considered limiting.

In one embodiment, the amount of time that it takes for winch time, for wireline operations described above, can be calculated through a formula. Pass duration; however, is different in that operations for specific functions performed by the wireline tools can have different lengths to achieve. Based upon experience obtained from multiple data sets, a machine learning algorithm may aid in selection of the tools needed and the total amount of time that will be taken in which to complete the required passes.

In embodiments, data used for the analysis by the machine learning algorithm may be stored in various forms and been recorded by various methods/software configurations. In non-limiting embodiments that software may be through, different Schlumberger/SLB computer calculation programs, such as Maxwell and Tallix, may be used. The data stored into these different passes may be used for establishing a machine learning algorithm. The data contained therein can be used to discover certain regular patterns, including the prediction of run duration on the well. The model trained with these data can be used by other programs to provide users with better reference.

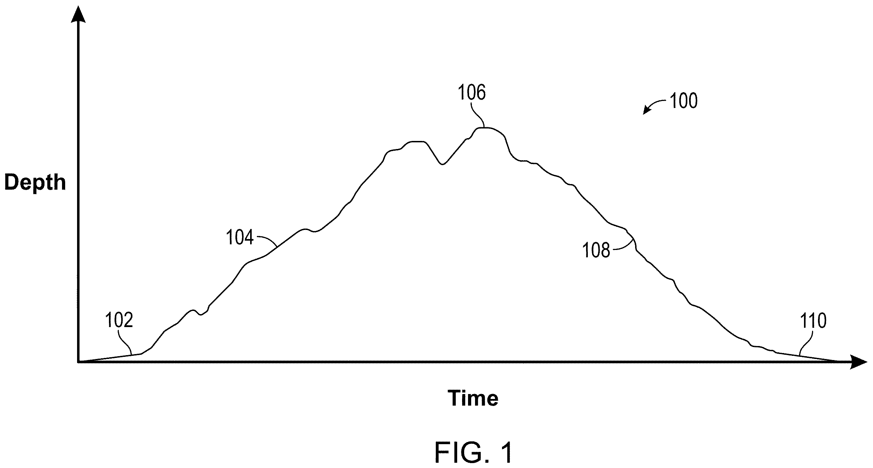

Referring to FIG. 1, a graph of a run duration **100** timeline is illustrated. Such graphs and velocities are seen during a typical project. As previously stated, the run duration for the entire wellbore is equated to a winch time added to the logging time. The run duration, as illustrated in FIG. 1, includes components of a surface preparation **102,** a run in the hole **104** (defined as the amount of time placing the wireline tool into proper position for measurement, a logging portion **106,** a pull out of the hole portion **108** and a surface post job portion **110.**

The surface preparation **102** portion of the run duration timeline is conducted before operation. Typical steps performed in the surface preparation **102** portion may include combining the tool string on the surface to verify that the tools in the tool string are property working.

The next portion of the run duration **100** timeline is the run in the hole **104** portion. The run in the hole **104** portion may be calculated based upon factors such as winch speed (average and maximum) and the total amount of distance in the wellbore that must be traveled down to the required logging portion of the wellbore.

The next portion of the run duration **100** timeline is the logging portion **106.** The logging portion **106** may be determined through use of a deep machine learning algorithm that uses past data to arrive at a correct estimate for field operations.

The next portion of the run duration **100** timeline is the poll out of hole portion 108. This portion of the duration involves retrieving the wireline apparatus from the wellbore depths where the logging portion **106** was occurring.

The next portion of the run duration **100** timeline is the surface post job **108** portion. After tools are placed back on the surface, operators will require time for processing of information received during the downhole logging portion **106.**

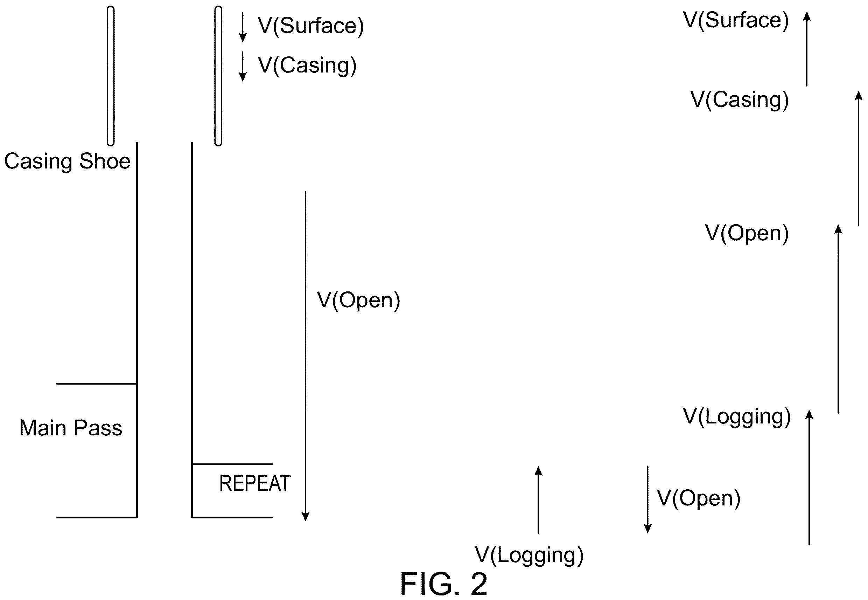

Referring to FIG. 2, a depiction of calculation of pass time is illustrated. In this embodiment, at the left side of FIG. 2, a depiction of a wellbore cross-section is illustrated. In this wellbore cross-section, the casing shoe is illustrated at the surface with the wellbore extending downwardly. In one non-limiting embodiment, it can be shown in the left most portion of FIG. 2, that there are distinct areas of the wellbore. These distinct areas of the wellbore may be traversed according to various speeds. In the "Main Pass" section, the amount of speed for traversing this section is based upon the wireline tool string analysis capabilities. As will be understood, the longer the "Main Pass" is, the longer it will be to traverse such a section. As will illustrated, there may be a section that may have to be repeated according to the needs of the project.

A comparison of different velocity rates for a cable and attached wellbore tool string are illustrated. At or near the surface, care is taken by operators to not over exert forces on the tool string and allow the tool string to be removed from the wellbore in a careful manner. Velocities V(surface) for this section of wellbore are generally the lowest at 2000 ft/hr. After the top section of the wellbore, transitioning of the tool string and cable through the casing, as would logically be assumed, is rapid. No potential for obstructions are present and a greater allowance of velocity is present. The amount of velocity; however, is based upon a required tension in the wellbore tool string. Thus, the velocity cannot be in freefall, but rather a lesser amount of velocity. It has been found, through experimentation and analysis, that this velocity V(Casing) may be 15000 ft/hr. After traversing the casing and going into the open wellbore, velocities V(Open) are reduced for safety to a level of approximately 8000 ft/hr.

As will be understood, this velocity in the open of 8000 ft/hr is reduced at the bottom of the wellbore or at the site of the necessary analysis for the wireline services. The velocity reaches a zero point and then the velocity according to the logging parameters for the wellbore tool string is achieved. If a repeat of the analysis is necessary, the velocity, in a downward direction, is increased to the 8000 ft/hr standard to the point needed for wellbore analysis. The velocity traveling upward then is dependent, once again, on the requirement of the logging tools. After logging is completed, the wellbore tools must be recovered. In a reversal from what was previously disclosed, the travel through the open hole is 8000 ft/hr and through the casing section of 15000 ft/hr. Near the surface of the wellbore, the speed is reduced down to 2000 ft/hr until the wellbore tools are recovered.

As seen by the example in FIG. 2, velocities chosen for deployment may be determined through experience with other types of similar wellbores. A deep learning network or model may characterize the velocities and then simultaneously solve the amount of time for each wellbore section according to the length of the individual wellbore sections.

In embodiments, the run splits into winch duration and pass duration. The winch duration can be calculated through use of formulas, where the pass duration can be predicted with a machine learning model. Based on the collected historical data, after data validity verification and screening, factors that may affect the duration prediction are explored, such as geographical location, tool selection, fluid type, and pass interval. After the feature is selected, it is further processed into numeric data that can be recognized by the model. After calculations, the model with the best effect is selected and integrated into job planning software and execution in the field.

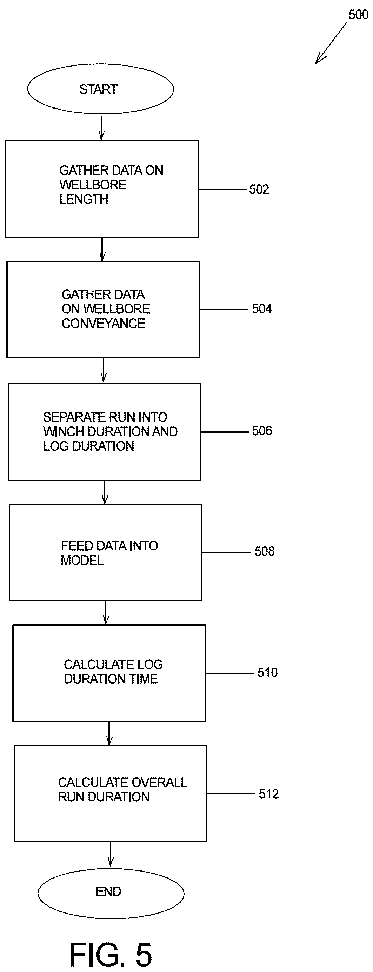

Referring to FIG. 5, a method **500** in conformance with one example embodiment of the disclosure is discussed. The method **500** may be used to model a run duration of a wireline wellbore activity described above in relation to FIGS. 1 and 2. At **502,** the method comprises gathering data related to a wellbore. In some embodiments, the data gathered may be related to a wellbore length, a wellbore diameter, a wellbore shoe length, a wellbore distance to travel to an area needed to be scanned, and/or a wellbore distance to be scanned. At **504,** the method may further comprise gathering data related to the wellbore conveyance. Such data may be, for example, the maximum draw speed of the wellbore conveyance as well as wellbore conveyance speeds during wireline scanning activities. At **506,** the method may further comprise of separating the run duration into a winch duration and a logging duration, wherein a winch duration is calculated according to an algorithm. In one example embodiment, the algorithm may account for different speeds of the winch through various sections of the wellbore. Such sections may be, for example, a shoe section, a casing section, and an open wellbore section. Calculations for the winch time may be made through experience, such that travels through the various sections may be performed at different rates. The amount of time for the winch duration may be, for example, the distance of shoe travel/the average shoe travel velocity + the distance of casing travel/the average casing travel velocity+ the open hole distance/the average open hole velocity. Other formulas may be used and the above-identified calculation is but one possible alternative. At **508,** the method may further comprise feeding the data from the wellbore and the wellbore conveyance, as well as wellbore downhole tools to be used to scan the wellbore, into a model. At **510,** the method may further comprise calculating a logging duration time based upon the data fed into the model, wherein the model is a machine learning model. In embodiments, the method may assume different downhole conditions, such as geological strata to be encountered. In other embodiments, the method may require entry of the geological properties to be encountered. The calculation of the logging duration time may be calculated by using different combinations of logging tools to achieve the most efficient time for wellbore activities. The calculation of the different logging durations may be kept in a table format to allow operators the ability to review the time data for each logging configuration. At **512,** the method may further comprise calculating an overall run duration by adding the winch duration with the logging duration. As will be understood, each configuration may provide for a different overall run duration. Upon successful completion of field activities, times for the logging and winch durations may be loaded into a database and the model retrained to provide better future results. Aspects of the method may be stored on a compact disk, a non-volatile memory arrangement or other storage configuration.

Aspects of the disclosure also provide methods that may be performed to achieve a stated goal, including controlling components described in the specification. In some embodiments, the methods described in FIG. 5 may be performed by circuits and/or computers that are configured to perform such tasks.

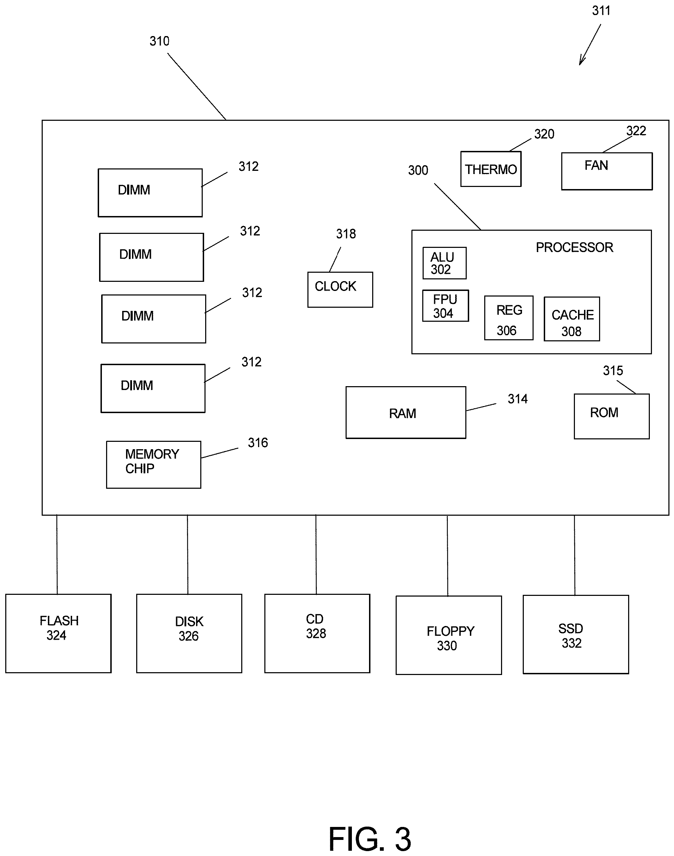

In such embodiments, referring to FIG. 3, a computing apparatus used in the control of equipment is illustrated. In FIG. 3, a processor **300** is provided to perform computational analysis for instructions provided. The instruction provided, code, may be written to achieve the desired goal and the processor may access the instructions. In other embodiments, the instructions may be provided directly to the processor **300.** This computing apparatus may be configured to run a deep neural network that may be trained on data to provide cost-effective solutions to the method presented above in FIG. 5. In such embodiments, the deep neural network may be configured with several "layers" and a feed-back loop to allow for successive calculations to become more accurate based on the training data provided. Selection of data to train the model run by the processor **300** may be obtained from past wellbore logging runs that have been successful. As will be understood, embodiments of a deep neural network may be location specific, if very high accuracy is desired, or may be a more generalized model that is good for different types of environments and scenarios. The computing apparatus may be a web-based and/or interconnected computer, such as a laptop or desktop. In other embodiments, the computing apparatus may be located in a centralized location so that a single operator may conduct multiple simultaneous analyses at a control location, thereby increasing overall efficiency of the oil field service company that uses such a design.

In other embodiments, other components may be substituted for generalized processors. These specifically designed components, known as application specific integrated circuits ("ASICs") are specially designed to perform the desired task. As such, the ASIC's generally have a smaller footprint than generalized computer processors. The ASIC's, when used in embodiments of the disclosure, may be a field programmable gate array technology, that allows a user to make variations in computing, as necessary. Thus, the methods described herein are not specifically held to a precise embodiment, rather alterations of the programming may be achieved through these configurations.

In embodiments, when equipped with a processor **300,** the processor may have an arithmetic logic unit ("ALU") **302,** a floating point unit ("FPU") **304,** registers **306** and a single or multiple layer cache **308.** The arithmetic logic unit **302** may perform arithmetic functions as well as logic functions. The floating point unit **304** may be math coprocessor or numeric coprocessor to manipulate number for efficiently and quickly than other types of circuits. The registers **306** are configured to store data that will be used by the processor during calculations and supply operands to the arithmetic unit and store the result of operations. The single or multiple layer caches **308** are provided as a storehouse for data to help in calculation speed by preventing the processor **300** from continually accessing random access memory ("RAM").

Aspects of the disclosure provide for the use of a single processor **300.** Other embodiments of the disclosure allow the use of more than a single processor. Such configurations may be called a multi-core processor, where different functions are conducted by different processors, to aid in calculation speed. In embodiments, when different processors are used, calculations may be performed simultaneously by different processors, a process known as parallel processing.

The processor **300** may be located on a motherboard **310.** The motherboard **310** is a printed circuit board that incorporates the processor **300** as well as other components helpful in processing, such as memory modules ("DIMMS") **312,** random access memory **314,** read only memory **315,** non-volatile memory chips **316,** a clock generator **318** that keeps components in synchronization, as well as connectors for connecting other components to the motherboard **310.** The motherboard **310** may be different sizes according to the needs of the computer architect. To this end, the different sizes, known as form factors, may vary from sizes from a cellular telephone size to a desktop personal computer size. The motherboard **310** may also provide other services to aid in functioning of the processor, such as cooling capacity. Cooling capacity may include a thermometer **320** and a temperature-controlled fan **322** that conveys cooling air over the motherboard **310** to reduce temperature.

Data stored for execution by the processor **300** may be stored in several locations, including the random access memory **314,** read only memory, flash memory **324,** computer hard disk drives **326,** compact disks **328,** floppy disks **330** and solid state drives **332.** For booting purposes, data may be stored in an integrated chip called an EEPROM, that is accessed during start-up of the processor. The data, known as a Basic Input/Output System ("BIOS"), contains, in some example embodiments, an operating system that controls both internal and peripheral components.

Different components may be added to the motherboard or may be connected to the motherboard to enhance processing. Examples of such connections of peripheral components may be video input/output sockets, storage configurations (such as hard disks, solid state disks, or access to cloud-based storage), printer communication ports, enhanced video processors, additional random access memory and network cards.

The processor and motherboard may be provided in a discrete form factor, such as personal computer, cellular telephone, tablet, personal digital assistant or other component. The processor and motherboard may be connected to other such similar computing arrangements in networked form. Data may be exchanged between different sections of the network to enhance desired outputs. The network may be a public computing network or a secured network where only authorized users or devices may be allowed access.

As will be understood, method steps for completion may be stored in the random access memory, read only memory, flash memory, computer hard disk drives, compact disks, floppy disks and solid state drives.

Different input/output devices may be used in conjunction with the motherboard and processor. Input of data may be through a keyboard, voice, Universal Serial Bus ("USB") device, mouse, pen, stylus, Firewire, video camera, light pen, joystick, trackball, scanner, bar code reader and touch screen. Output devices may include monitors, printers, headphones, plotters, televisions, speakers and projectors.

Embodiments of the disclosure, and specifically the claims, are described next. Such embodiments should not be considered limiting. In one non-limiting embodiment, a method for modeling a run duration is disclosed. The method may comprise gathering data related to a wellbore. The method may further comprise gathering data related to a wellbore conveyance. The method may further comprise separating the run duration into a winch duration time and a logging duration time, wherein the winch duration time is calculated according to an algorithm. The method may further comprise feeding the data related to the wellbore and wireline tools to be used for scanning a section of the wellbore into a model. The method may further comprise calculating the logging duration time according to the model. The method may further comprise calculating the run duration time of the wireline activity based upon the winch duration time and the logging duration time.

In another example embodiment, the method may be performed wherein the gathering the data related to the wellbore includes at least one of a wellbore length, a wellbore diameter, a wellbore shoe length and a length of wireline wellbore to be analyzed by the wireline activity.

In another example embodiment, the method may be performed, wherein the wellbore conveyance is a wireline truck.

In another example embodiment, the method may be performed, wherein the gathering of the data to the wellbore conveyance includes a maximum speed of travel.

In another example embodiment, the method may be performed, wherein the algorithm includes a maximum speed per section of the wellbore for drawing and a distance of wellbore that the maximum speed per section of wellbore is drawn.

In another example embodiment, the method may be performed wherein the algorithm separates a wellbore length into separate sections.

In another example embodiment, the method may be performed wherein the separate sections include at least a shoe section, a casing section and an open wellbore section.

In another example embodiment, the method may be performed wherein the calculating the run duration time of the wireline activity based upon the winch duration time and the logging duration time is accomplished through addition.

In another example embodiment, the method may be performed wherein the feeding the data related to the wellbore includes entering geological properties encountered by the wellbore.

In another example embodiment, the method may be performed wherein the calculating the logging duration time according to the model involves at least two uses of wireline downhole tools.

In another example embodiment, the method may be performed wherein the model uses artificial intelligence.

In another example embodiment, the method may be performed wherein the model has at least two nodal layers.

In another example embodiment, the method may be performed wherein the model uses data of prior wireline activities to calculate the logging duration.

In another example embodiment, the method may further comprise storing the calculated run duration time in a non-volatile memory.

In another example embodiment, the method may further comprise displaying the calculated run duration time on a monitor.

In another example embodiment, an article of manufacture that is configured to store instructions readable by a computer, the instructions including a method for estimating a run duration time of a wireline activity, comprising gathering data related to a wellbore. The method contained on the article of manufacture may also comprise gathering data related to a wellbore conveyance. The method contained on the article of manufacture may also comprise separating the run duration into a winch duration time and a logging duration time, wherein the winch duration time is calculated according to an algorithm. The method contained on the article of manufacture may also comprise feeding the data related to the wellbore and wireline tools to be used for scanning a section of the wellbore into a model. The method contained on the article of manufacture may also comprise calculating the logging duration time according to the model. The method contained on the article of manufacture may also comprise calculating the run duration time of the wireline activity based upon the winch duration time and the logging duration time.

In another example embodiment, the article of manufacture may be configured wherein the article of manufacture is one of a compact disk, a universal serial bus storage device and a solid-state drive.

In another example embodiment, the article of manufacture may be configured wherein the method stored on the article of manufacture uses an algorithm to separate a wellbore length into separate sections.

In another example embodiment, the article of manufacture may be configured wherein the separate sections include at least a shoe section, a casing section and an open wellbore section.

In another example embodiment, the article of manufacture may be configured wherein the model uses artificial intelligence.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may be varied in many ways. Such variations are not to be regarded as a departure from the disclosure, and all such modifications are intended to be included within the scope of the disclosure.

While embodiments have been described herein, those skilled in the art, having benefit of this disclosure, will appreciate that other embodiments are envisioned that do not depart from the inventive scope. Accordingly, the scope of the present claims or any subsequent claims shall not be unduly limited by the description of the embodiments described herein.

## Claims

1. A computer-implemented method for estimating a run duration time of a wireline activity, comprising:
gathering data related to a wellbore (402);
gathering data related to a wellbore conveyance (450);
separating the run duration into a winch duration time and a logging duration time, wherein the winch duration time is calculated according to an algorithm;
feeding the data related to the wellbore (402) and wireline tools (460) to be used for scanning a section of the wellbore (402) into a model;
calculating the logging duration time according to the model; and
calculating the run duration time of the wireline activity based upon the winch duration time and the logging duration time.

2. The method according to claim 1, wherein the gathering the data related to the wellbore includes at least one of a wellbore length, a wellbore diameter, a wellbore shoe length and a length of wireline wellbore to be analyzed by the wireline activity.

3. The method according to claim 1 or 2, wherein the gathering of the data to the wellbore conveyance includes a maximum speed of travel.

4. The method according to any one of claims 1 to 3, wherein the algorithm includes a maximum speed per section of the wellbore for drawing and a distance of wellbore that the maximum speed per section of wellbore is drawn.

5. The method according to any one of claims 1 to 4, wherein the algorithm separates a wellbore length into separate sections.

6. The method according to claim 5, wherein the separate sections include at least a shoe section, a casing section and an open wellbore section.

7. The method according to any one of claim 1 to 6, wherein the calculating the run duration time of the wireline activity based upon the winch duration time and the logging duration time is accomplished through addition.

8. The method according to any one of claims 1 to 7, wherein the feeding the data related to the wellbore includes entering geological properties encountered by the wellbore.

9. The method according to any one of claims 1 to 8, wherein the calculating the logging duration time according to the model involves at least two uses of wireline downhole tools.

10. The method according to any one of claims 1 to 9, wherein the model uses artificial intelligence and, wherein the model uses data of prior wireline activities to calculate the logging duration.

11. A computer program comprising instructions which, when the program is executed by a computer, cause the computer to carry out the method of any one of claims 1 to 10.

12. A computer-readable medium comprising instructions which, when executed by a computer, cause the computer to carry out the method of any one of claims 1 to 10.
